# EUROPÄISCHE PATENTSCHRIFT

(11) **EP 0 498 861 B1**
(45) Veröffentlichungstag und Bekanntmachung des Hinweises auf die Patenterteilung: **04.10.1995**
(21) Anmeldenummer: 91912570.8
(22) Anmeldetag: 03.07.1991
(51) Int. Cl.: B60T 8/40, B60T 8/48

(54) **HYDRAULISCHE BREMSANLAGE MIT EINER EINRICHTUNG ZUR REGELUNG DES BREMS- UND/ODER ANTRIEBSSCHLUPFES**
HYDRAULIC BRAKE SYSTEM WITH BRAKE AND/OR DRIVE SLIP CONTROL DEVICE
SYSTEME HYDRAULIQUE DE FREINAGE A REGULATEUR DU GLISSEMENT AU FREINAGE ET/OU A L'ENTRAINEMENT

(30) Priorität: 31.08.1990 DE 4027565
(43) Veröffentlichungstag der Anmeldung: 19.08.1992
(73) Patentinhaber: ITT Automotive Europe GmbH, 60488 Frankfurt (DE)
(72) Erfinder: REINARTZ, Hans-Dieter, D-6000 Frankfurt am Main 50 (DE); STEFFES, Helmut, D-6234 Hattersheim 3 (DE)
(86) Internationale Anmeldenummer: EP9101243
(87) Internationale Veröffentlichungsnummer: WO9204215

(56) Entgegenhaltungen:
- EP-A- 0 253 157
- DE-C- 3 731 636
- GB-A- 2 186 647
- Patent Abstracts of Japan, Band 10, Nr. 301 (M-525)[2357], 14. Oktober 1986, &JP, A, 61113545 (NIPPON AIR BRAKE CO.) 31. Mai 1986, siehe das ganze Dokument
- Patent Abstracts of Japan, Band 14, Nr. 91 (M-938)(4034), 20. Februar 1990, & JP-A-1301448 (AKEBONO BRAKE IND. CO.) 5. Dezember 1989, siehe das ganze Dokument

## Beschreibung

Eine Bremsanlage gemäß dem Oberbegriff des Anspruchs 1 ist in EP-A-0 253 157, DE 37 31 636 A1 sowie in der DE 40 00 837 A1 beschrieben. Die DE 40 00 837 A1 geht zurück auf eine Anmeldung beim Deutschen Patentamt vom 13.01.1990.

In den beiden DE-Schriften wird eine Bremsanlage beschrieben, bei denen eine Pumpe in der Bremsleitung liegt. Dies bedeutet, daß die Saugseite der Pumpe mit dem Hauptzylinder und die Druckseite mit der Radbremse verbunden sind. Wenn der Hauptbremszylinder betätigt wird, wird Druckmittel aus dem Hauptbremszylinder durch die Pumpe in die Radbremszylinder verdrängt. Bei diesem Vorgang wird die Pumpe selbst nicht betätigt. In der DE 37 31 636 A1 ist die dargestellte Bremsanlage mit einer Antriebsschlupfregelung ausgerüstet. Bei einer Antriebsschlupfregelung wird die Pumpe eingeschaltet, so daß sie Druckmittel aus dem Vorratsbehälter über den Hauptzylinder ansaugt und zu den Radbremsen fördert. In der DE 40 00 837 A1 ist eine Antiblockierregelung vorgesehen. Eine Antiblockierregelung kann nur dann auftreten, wenn der Hauptzylinder betätigt ist. Daher ist es notwendig ein Trennventil zwischen der Saugseite der Pumpe und dem Hauptbremszylinder vorzusehen, das geschlossen wird, sobald eine Blockierschutzregelung notwendig wird. Das Trennventil wird elektromagnetisch betätigt.

Wird das Trennventil nicht geschaltet, hätte dies zur Folge, daß der Hauptbremszylinder während einer Regelung leer gepumpt wird. Das Schalten des Trennventils ist also zwingende Voraussetzung dafür, daß eine Regelung stattfinden kann. Es ist somit ohne weiteres ersichtlich, daß das Umschalten des Trennventils überwacht werden muß.

Die Erfindung beruht daher auf der Aufgabe, die Bremsanlage gemäß der DE 37 31 636 A1 so weiter zu entwickeln, daß die Anlage auch zur Bremsschlupfregelung eingesetzt und daß auf ein elektromagnetisch betätigtes Trennventil verzichtet werden kann. Auf diese Weise soll eine sicher arbeitende Anlage entstehen.

Die Aufgabe wird mit den Mitteln gelöst, die in Anspruchs 1 genannt sind. Weitere Ausbildungen der Idee sind in den Unteransprüchen beschrieben.

Die Erfindung hat zur Folge, daß die Pumpe nur zu Beginn einer Bremsung durchspült wird. Dies ist vollkommen ausreichend, um zu vermeiden, daß sich in der Pumpe Luftblasen bilden. Sobald ein bestimmter Druckpunkt, z.B. 5 bar erreicht wird, wird die Bremsleitung geschlossen und die weitere Versorgung der Radbremsen mit Druckmittel erfolgt über eine Nebenleitung, in die ein Vordruckventil eingeschaltet ist. Während einer Regelung saugt die Pumpe über einen gesonderten Sauganschluß Druckmittel aus einem Vorratsbehälter an.

Im folgenden soll anhand eines Ausführungsbeispieles die Idee näher erläutert werden. Die Bremsanlage besteht aus einem Hauptbremszylinder 1, an den über eine Bremsleitung 2 eine oder mehrere Radbremsen 3 angeschlossen sind. Die Pumpe 4, die weiter unten näher beschrieben werden soll, ist in die Bremsleitung eingefügt, wobei ein Anschluß A über ein erstes Bremsleitungsstück 5 mit dem Hauptbremszylinder 1 und ihre Druckseite D über ein zweites Bremsleitungsstück 6 mit der Radbremse verbunden ist. In das zweite Bremsleitungsstück 6 ist ein Einlaßventil 7 eingefügt. Das Einlaßventil 7 wird elektromagnetisch betätigt. Es hält in seiner Grundstellung die Leitung offen und sperrt sie in seiner Schaltstellung. Die Radbremse 3 steht über eine Rücklaufleitung 9 mit einem Druckmittelsammler in Verbindung, wobei in der Rücklaufleitung 9 ein Auslaßventil 8 eingefügt ist, das ebenfalls elektromagnetisch betätigt wird und das in seiner Grundstellung die Rücklaufleitung sperrt und sie in seiner Schaltstellung öffnet. Der Druckmittelsammler 25 wird gebildet vom Druckmittelvorratsbehälter 25 am Hauptbremszylinder 1. Druckmittelvorratsbehälter 25 und Hauptbremszylinder 1 stehen bei nicht betätigtem Pedal miteinander in Druckmittelverbindung. Der Vorratsbehälter 25 steht über ein Saugventil 22 mit dem Pumpenraum 21 in Verbindung.

Die Radbremse 3 steht über eine Direktleitung 13 unmittelbar mit dem Hauptbremszylinder 1 in Verbindung. Die Direktleitung 13 weist ein Rückschlagventil 14 auf, das zum Hauptbremszylinder hin öffnet.

Die Pumpe 4 ist gemäß dieses Ausführungsbeispieles als Kolbenpumpe dargestellt, deren Pumpenkolben 19 über einen motorisch angetriebenen Exzenter 20 bewegt wird. Der Pumpenraum 21 vor dem Pumpenkolben 19 steht über je einem Rückschlagventil 22 bzw. 23 mit der Saugseite S bzw. der Druckseite D der Pumpe 4 in Verbindung. Das Rückschlagventil 22 öffnet zum Pumpenraum, während das Rückschlagventil 23 zum Pumpenraum hin sperrt.

In dem Bremsleitungsstück 5 ist ein Umschaltventil 28 eingefügt, das zwei Schaltstellungen aufweist. In der ersten Schaltstellung I ist die Bremsleitung offen. In der zweiten Schaltstellung wird in die Bremsleitung ein Rückschlagventil eingefügt, das zur Pumpe hin sperrt. Das Umschaltventil 28 wird vom Hauptzylinderdruck über eine Steuerleitung 29 gegen den Druck einer Feder von der ersten in die zweite Schaltstellung gebracht. Die Vorspannkraft der Feder entspricht in etwa einem Umschaltdruck von 5 bar.

Parallel zum Umschaltventil 28 und zur Pumpe 4 ist in einer Nebenleitung 26 ein Vordruckventil 27 eingefügt, das bei einem Druck von ca. 2 bar öffnet. Die Nebenleitung 26 schließt den Hauptbremszylinder 1 unmittelbar an das Einlaßventil 7 an.

Die Pumpenkammer 21 weist somit 3 Anschlüsse auf, nämlich ein Anschluß A zum Hauptbremszylinder, einen Anschluß D zur Radbremse und einen Anschluß S zum Druckmittelvorratsbehälter 25.

Die dargestellte Bremsanlage arbeitet nach dem folgenden Prinzip:
1. Ungeregelte Bremsung.
   Mit Betätigen des Pedals (symbolisch dargestellt) wird Druckmittel aus dem Hauptbremszylinder 1 in die Radbremse 3 verdrängt. Der Druckmittelweg führt über das offene Umschaltventil 28, den Pumpenraum 21, das zweite Rückschlagventil 23 und das offene Einlaßventil 7. Es wird ein Druck in der Radbremse 3 aufgebaut, der zu einer Radverzögerung und in Folge zu einer Fahrzeugverzögerung führt. Wird das Pedal gelöst, so fließt Druckmittel aus der Radbremse 3 über das sich öffnende Rückschlagventil 14 durch die Direktleitung 13 zurück in den Hauptbremszylinder 1. Wichtig ist, daß der Druckaufbaupfad während einer normalen Bremsung durch die Pumpenkammer 21 führt.
   Das Umschaltventil 28 schaltet bei einem Druck von ca. 5 bar in der Bremsleitung um. Damit ist die Bremsleitung in Druckaufbaurichtung gesperrt. Der weitere Druckaufbau erfolgt nun über die Nebenleitung 26 und dem Vordruckventil 27. Das Vordruckventil hat die Aufgabe diese Nebenleitung solange zu sperren, wie die Hauptleitung noch geöffnet ist.
2. Geregelte Bremsung
   Das Bremsverhalten des abzubremsenden Rades wird mittels nicht dargestellter Sensoren laufend überwacht. Eine elektronische Auswerteeinheit kann daher sofort feststellen, wenn das Rad zu blockieren droht. Tritt dieser Fall ein, so leitet die Auswerteeinheit die folgenden Aktionen ein. Zunächst wird das Einlaßventil 7 geschaltet, so daß die Bremsleitung gesperrt ist. Das Auslaßventil 8 wird geöffnet, so daß Druckmittel aus der Radbremse in den Druckmittelvorratsbehälter 25 abfließen kann. Der Pumpenantrieb M wird eingeschaltet, so daß die Pumpe Druckmittel aus dem Druckmittelvorratsbehälter 25 über das Saugventil 22 ansaugt. Das Druckmittel gelangt, falls das Einlaßventil geöffnet ist, zur Radbremse und über das umgeschaltete Umschaltventil 28 in den Hauptbremszylinder 1 und von dort über die als Regelventile ausgebildeten Zentralventile zurück in den Vorratsbehälter 25. Durch sukzessives Schalten des Einlaßventils 7 und des Auslaßventils 8 kann der Radbremse Druckmittel zugeführt und entnommen werden. Dies geschieht nach einem festgelegten Algorithmus, so daß am Rad ein optimaler Schlupfwert eingestellt wird. Über die Direktleitung 13 wird der Druck in der Radbremse auf den Druck im Hauptbremszylinder begrenzt. Nimmt daher der Fahrer die Pedalkraft zurück, sinkt auch der Druck in der Radbremse, so daß der Bremsvorgang bzw. Regelvorgang beendet wird.

### Bezugszeichenliste

- 1: Hauptbremszylinder
- 2: Bremsleitung
- 3: Radbremse
- 4: Pumpe
- 5: erstes Bremsleitungsstück
- 6: zweites Bremsleitungsstück
- 7: Einlaßventil
- 8: Auslaßventil
- 9: Rücklaufleitung
- 13: Direktleitung
- 14: Rückschlagventil
- 20: Exzenter
- 21: Pumpenraum
- 22: Saugventil
- 23: Druckventil
- 25: Druckmittelvorratsbehälter
- 26: Nebenleitung
- 27: Vordruckventil
- 28: Umschaltventil
- 29: Steuerleitung

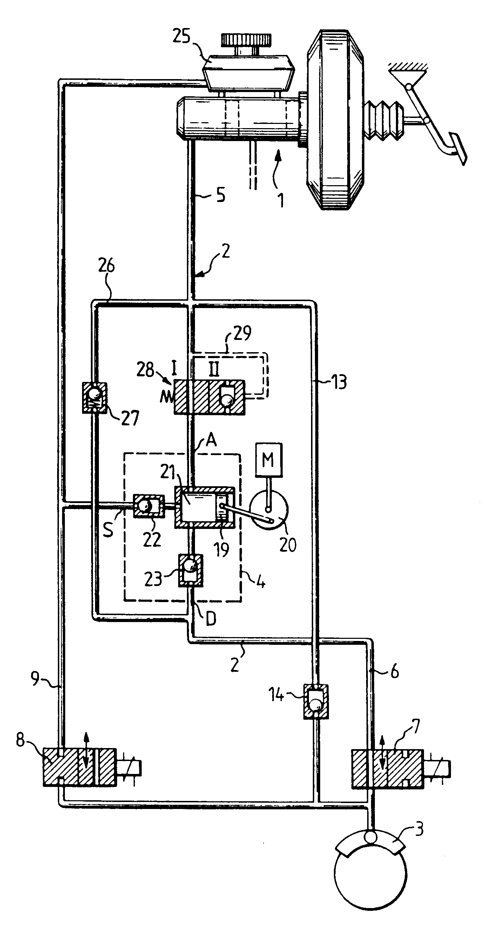

## Patentansprüche

1. Hydraulische Bremsanlage mit einer Einrichtung zur Regelung des Brems- und/oder Antriebsschlupfes bestehend aus einem pedalbetätigten Hauptbremszylinder (1), mindestens einer Radbremse (3), die über eine Bremsleitung mit dem Hauptbremszylinder (1) verbunden ist, wobei mit Betätigen des Pedals Druckmittel aus dem Hauptbremszylinder (1) über die Bremsleitung in den Radbremszylinder verdrängt wird, und mit einer Hydraulikpumpe (4), die derart in die Bremsleitung eingefügt ist, daß ein Anschluß (A) der Pumpe an den Hauptbremszylinder (1) und ein anderer Anschluß D) der Pumpe an den Randbremszylinder anschließt, dadurch **gekennzeichnet,** daß zwischen dem Hauptbremszylinder (1) und der Pumpe (4) ein Schaltventil (28) eingefügt ist, das in seiner ersten Schaltstellung die Bremsleitung (2) offenhält und in seiner zweiten Schaltstellung in die Bremsleitung (2) ein Rückschlagventil einfügt, das in Richtung auf die Pumpe (4) sperrt, wobei das Schaltventil (28) vom Hauptzylinderdruck von der ersten in die zweite Schaltstellung schaltbar ist.

2. Bremsanlage nach Anspruch 1, dadurch **gekennzeichnet**, daß der Hauptbremszylinder (1) mit der Druckseite D der Pumpe über über eine Nebenleitung (26) verbunden ist, wobei in die Nebenleitung ein Vordruckventil (27), eingefügt ist, das zur Druckseite D hin öffnet.

3. Bremsanlage nach Anspruch 1, dadurch **gekennzeichnet**, daß das Umschaltventil (28) bei einem Hauptzylinderdruck von ca. 5 bar umschaltet.

4. Bremsanlage nach Anspruch 3, dadurch **gekennzeichnet**, daß der Öffnungsdruck des Vordruckventils (27) kleiner ist, als der Umschaltdruck des Umschaltventils (28).

5. Bremsanlage nach einem der vorhergehenden Ansprüche, dadurch **gekennzeichnet**, daß die Rücklaufleitung an einem Druckmittelsammler ( z.B. einem Druckmittelvorratsbehälter 25), angeschlossen ist und, daß die Pumpe (4) über ein Saugventil (22) an den Vorratsbehälter (25) anschließt.

## Claims

1. A hydraulic brake system including a means for controlling the brake slip and/or traction slip, including a pedal-actuated master brake cylinder (1), at least one wheel brake (3) which, through a brake conduit, is in communication with the master brake cylinder (1), with pressure fluid, upon actuation of the pedal, being displaced from the master brake cylinder (1), through the brake conduit, into the wheel brake cylinder, and a hydraulic pump (4) so inserted into the brake conduit that a connection (A) of the pump to the master brake cylinder (1) and a second connection (D) of the pump is in communication with the wheel brake cylinder,
characterized in that provided between the master brake cylinder (1) and the pump (4) is a switch valve (28) which, in its first switching position, keeps open the brake conduit (2) and, in its second switching position, causes a check valve to become effective and block the brake conduit (2) toward the pump (4), with the switch valve (28) being switchable by the master cylinder pressure from the first switching position into the second switching position.

2. A brake system as claimed in claim 1,
characterized in that the master brake cylinder (1) is in communication with the pressure side D of the pump, through a secondary conduit (26), with a pressure retaining valve (27) being inserted into the secondary conduit and opening toward the pressure side D.

3. A brake system as claimed in claim 1,
characterized in that the switch-over valve (28) will switch over at a master cylinder pressure of about 5 bar.

4. A brake system as claimed in claim 3,
characterized in that the opening pressure of the pressure retaining valve (27) is less than the switch-over pressure of the switch-over valve (28).

5. A brake system as claimed in any one of the preceding claims,
characterized in that the return-flow conduit is in communication with a pressure fluid collector (e.g. a pressure fluid reservoir 25), and that the pump (4), through a suction valve (22), is in communication with the reservoir (25).

## Revendications

1. Système hydraulique de freinage, comprenant un dispositif de régulation du glissement de freinage et/ou de traction, constitué d'un maître-cylindre de frein (1) actionné par une pédale, d'au moins un frein de roue (3) qui communique avec le maître-cylindre de frein (1) par l'intermédiaire d'une conduite de frein, de l'agent de pression étant refoulé, lors d'un actionnement de la pédale, du maître-cylindre de frein (1) dans le cylindre de frein de roue en passant par la conduite de frein, et comprenant une pompe hydraulique (4) qui est interposée dans la conduite de frein d'une façon telle qu'un raccord (A) de la pompe est relié au maître-cylindre de frein (1) et un autre raccord (D) de la pompe est relié au cylindre de frein de roue, caractérisé en ce qu'entre le maître-cylindre de frein (1) et la pompe (4), il est interposé une valve de commutation (28) qui, dans sa première position de commutation, maintient ouverte la conduite de frein (2) et, dans sa seconde position de commutation, interpose dans la conduite de frein (2) une valve antiretour qui assure un blocage en direction de la pompe (4), la valve de commutation (28) étant agencée de façon à pouvoir être commutée de la première à la seconde position de commutation par la pression du maître-cylindre.

2. Système de freinage selon la revendication 1, caractérisé en ce que le maître-cylindre de frein (1) est relié au côté de refoulement (D) de la pompe par une conduite auxiliaire (26) dans laquelle est interposée une valve de pression préalable (27) qui s'ouvre en direction du côté de refoulement (D).

3. Système de freinage selon la revendication 1, caractérisé en ce que la valve de commutation (28) commute pour une pression du maître-cylindre de 5 bars environ.

4. Système de freinage selon la revendication 3, caractérisé en ce que la pression d'ouverture de la valve de pression préalable (27) est inférieure à la pression de commutation de la valve de commutation (28).

5. Système de freinage selon l'une des revendications précédentes, caractérisé en ce que la conduite de retour est raccordée à un accumulateur d'agent de pression (par exemple un réservoir de stockage d'agent de pression 25) et en ce que la pompe (4) est raccordée au réservoir de stockage (25) par l'intermédiaire d'une valve d'aspiration (22).
